# EUROPEAN PATENT APPLICATION

(11) **EP 3 428 779 A1**
(43) Date of publication of application: **16.01.2019**
(21) Application number: 18182165.3
(22) Date of filing: 06.07.2018
(51) Int. Cl.: G06F 3/01, G06F 3/03, G06K 9/00, H04N 7/15, G08B 13/196

(54) **USER-MACHINE INTERACTION METHOD AND SYSTEM BASED ON FEEDBACK SIGNALS**

(30) Priority: 10.07.2017 CN 201710557771
(71) Applicant: Shanghai Xiaoyi Technology Co., Ltd., Pudong New Area Shanghai 201203 (CN)
(72) Inventor: ZHAO, Lili, Shanghai, 201203 (CN); ZHANG, Junfeng, Shanghai, 201203 (CN)
(74) Representative: Finnegan Europe LLP

(57) **Abstract**

A user-machine interaction method and apparatus are disclosed. According to certain embodiments, the method may include obtaining (704) image data. The method may also include analyzing (706) the image data by the machine to detect occurrence of events. The method may also include generating (708) a first signal indicating detection of a first event. The method may further include performing an operation upon detection of a first occurrence of a second event after generation of the first signal.

## Description

### TECHNICAL FIELD

The present disclosure generally relates to user-machine interaction technology, and more specifically to a user-machine interaction method and system based on feedback signals.

### BACKGROUND

Many smart devices, such as smart cameras and smart phones, have no user interface (Ul) or only have limited capabilities for user-machine interaction. For example, size constraints of the smart devices render many traditional input interfaces, such as a keyboard, a mouse, etc., impractical. Thus, it is troublesome for a user to enter commands or other information into these devices.

Moreover, traditional Uls are achieved by way of, for example, key combinations, screen touches, mouse motions, mouse clicks, and displays. Even if the traditional Uls are used in certain smart devices, they often require precise hand-eye coordination of a user, and/or require multiple user actions to finish a task. Also, the traditional Uls often require the user to be in close proximity to the Uls. For example, for a surveillance camera attached to a ceiling, it is not practical for a user to reach a keyboard or touch screen on the camera. Thus, the traditional Uls may be unintuitive, slow, rigid, and cumbersome.

In addition, physically impaired people may not be able to effectively use a traditional Ul. For example, a visually impaired person cannot view information displayed on a screen and cannot use a touch screen or keyboard as intended. For another example, patients suffering from hand or finger arthritis often find it difficult, painful, or even impossible to perform the clicking action on a button.

The disclosed methods and systems address one or more of the demands listed above.

### SUMMARY

According to a first aspect of the present disclosure, there is provided a method for machine processing user commands, the method comprising: obtaining image data; analyzing the image data by a machine to detect occurrence of events; generating a first signal indicating detection of a first event; and performing an operation upon detection of a first occurrence of a second event after generation of the first signal.

Conveniently, analyzing the image data may comprise: performing a comparison of the image data to reference data representing the first and second events; and detecting the first and second events based on the comparison.

An embodiment of the present disclosure may further comprise: upon detection of the first occurrence of the second event after the first signal is generated, generating a second signal indicating detection of the second event.

An embodiment of the present disclosure may further comprise performing the operation only upon detection of the second event within a predetermined amount of time after generation of the first signal.

Advantageously, detection of a first occurrence of a second event after generation of the first signal may comprise: detecting the first occurrence of the second event after generation of the first signal, based on a value of a monitoring tag.

An embodiment of the present disclosure may further comprise, upon detection of the first event, setting the monitoring tag to a first value.

An embodiment of the present disclosure may further comprise, when neither the first event nor the second event is detected within a predetermined amount of time after the first signal is generated, setting the monitoring tag to a second value.

An embodiment of the present disclosure may further comprise, upon detection of the second event, determining whether the monitoring tag is set at the first value; and upon detecting that the monitoring is set at the first value, performing the operation.

An embodiment of the present disclosure may further comprise, after performing the operation, setting the monitoring tag to a second value.

Advantageously, the first and second events may correspond respectively to a first gesture and a second gesture.

Advantageously, the first signal may comprise at least one of a visual signal or an audio signal.

According to a second aspect of the present disclosure, there is provided a device, comprising: a memory storing instructions; and a processor configured to execute the instructions to cause the device to perform any of the methods described above with reference to the first aspect of the present disclosure.

According to a third aspect of the disclosure, there is provided a computer-readable storage medium storing instructions that, when executed by a processor of a machine, cause the machine to perform any of the methods described above with reference to the first aspect of the present disclosure.

Consistent with one embodiment of the present disclosure, a method for machine processing user commands is provided. The method may include obtaining image data. The method may also include analyzing the image data by the machine to detect occurrence of events. The method may also include generating a first signal indicating detection of a first event. The method may further include performing an operation upon detection of a first occurrence of a second event after generation of the first signal.

Consistent with another embodiment of the present disclosure, a device includes a memory and a processor is provided. The memory may store instructions. The processor may be configured to execute the instructions to: obtain image data; analyze the image data to detect occurrence of events; generate a first signal indicating detection of a first event; and perform an operation upon detection of a first occurrence of a second event after generation of the first signal.

Consistent with yet another embodiment of the present disclosure, a non-transitory computer-readable storage medium storing instructions is provided. The instructions cause a processor of a machine to perform a user-machine interaction method. The method may also include analyzing the image data by the machine to detect occurrence of events. The method may also include generating a first signal indicating detection of a first event. The method may further include performing an operation upon detection of a first occurrence of a second event after generation of the first signal.

It is to be understood that both the foregoing general description and the following detailed description are exemplary and explanatory only and are not restrictive of the invention, as claimed.

### DESCRIPTION OF DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating a user-machine interaction system, according to an exemplary embodiment.
Fig. 2 is a block diagram of an imaging device of the user-machine interaction system shown in Fig. 1, according to an exemplary embodiment.
Fig. 3 is a block diagram of a server of the user-machine interaction system shown in Fig. 1, according to an exemplary embodiment.
Fig. 4 is a block diagram of a user device of the user-machine interaction system shown in Fig. 1, according to an exemplary embodiment.
Fig. 5 is a schematic diagram illustrating an implementation of the user-machine interaction system shown in Fig. 1, according to an exemplary embodiment.
Fig. 6 is a schematic diagram illustrating a user-machine interaction method based on multiple feedback signals, according to an exemplary embodiment.
Fig. 7 is a schematic diagram illustrating a user-machine interaction method based on multiple feedback signals, according to an exemplary embodiment.
Fig. 8 is a flowchart of a user-machine interaction method, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise noted. The implementations set forth in the following description of exemplary embodiments do not represent all implementations consistent with the invention. Instead, they are merely examples of devices and methods consistent with aspects related to the invention as recited in the appended claims.

The present disclosure uses user-machine interactions in the form of natural interactions, such as gestures or audio interactions, to address problems with traditional Uls. Gesture or audio control is more convenient, intuitive, and effortless when compared to touching a screen, manipulating a mouse or remote control, tweaking a knob, or pressing a switch.

Building natural interactions between a human and a machine requires accurate gesture and/or audio recognition systems and face several challenges. For example, some gesture/audio recognition systems may be error-prone due to image/audio data noise, environment variations, low tolerance to gesture/sound ambiguities, limitations in the hardware and software, etc. Some systems also require users to perform gestures or speak words in certain ways. However, with the absence of appropriate and effective feedback from these systems, users are often uncertain as to how to improve produce the required gestures and sounds. Moreover, user fatigue may lower the quality of the gestures and sounds produced by a user and cause the accuracy of the gesture/audio-based interactions to suffer.

In particular, a machine may understand a user command by recognizing gestures performed by the user, based on two-dimensional (2D) or three-dimensional (3D) images of the gestures. 2D gesture recognition has a low hardware requirement and is thus suitable for a low budget. However, it often has a high error rate due to the limitations of the 2D images. For example, without depth information, a 2D gesture recognition system may have difficulty in assessing the shape, moving speed, and/or position of a human hand. 3D gesture recognition may be able to achieve higher accuracy, but requires special and complicated imaging equipment, such as a stereo camera with two or more lenses. Thus, 3D gesture recognition systems are more costly and may be kept from being widely used.

The present disclosure provides an accurate user-machine interaction system and method based on feedback signals. For illustrative purpose only, the principles of the present disclosure are described in connection with a user-machine interaction system based on 2D gesture recognitions. Nevertheless, those skilled in the art will recognize that the principles of the present disclosure may be applied in any types of user-machine interaction system, such as systems based on 3D gesture recognitions, audio recognitions, etc.

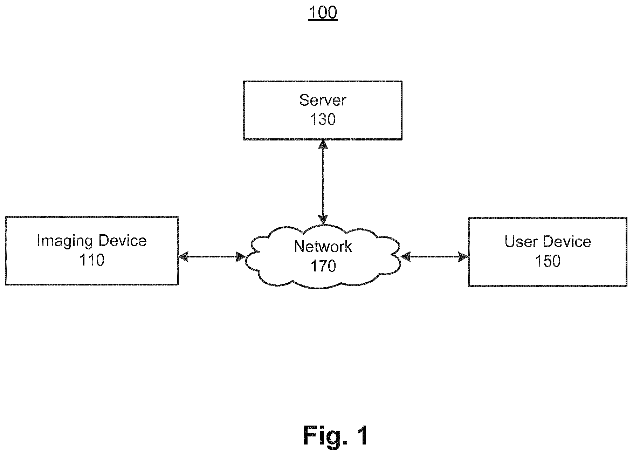

For example, Fig. 1 illustrates an exemplary user-machine interaction system 100. Referring to Fig. 1, a system 100 may include an imaging device 110, a server 130, and a user device 150. The components of system 100 may communicate via network 170.

Imaging device 110 may be a digital camera, a web camera, a smartphone, a tablet, a laptop, or a video gaming console equipped with a web camera. In operation, imaging device 110 may sense and monitor various types of information of an environment, such as a home, hospital, office building, parking lot, etc. For example, imaging device 110 may include an image sensor configured to capture images or videos (i.e., visual information) of the environment. Imaging device 110 may also be configured to capture sound information via a sound sensor, e.g., a microphone. Imaging device 110 may further be configured to sense motions of objects, vibrations in the environment, touches on imaging device 110. The present disclosure does not limit the type of information monitored and/or sensed by imaging device 110. In the following description, the visual information, audio information, motions, vibrations, touches, and other types of information sensed by imaging device 110 may be collectively referred to as "media information," where it is applicable.

Imaging device 110 may treat the captured media information in various ways. For example, imaging device 110 may locally display the captured images and/or videos in real time to a user of imaging device 110. As another example, imaging device 110 may live stream the images and/or videos to display devices located elsewhere, such as a security surveillance center, for monitoring the conditions of the environment. For yet another example, imaging device 110 may save the images and/or videos in a storage device for later playback.

Consistent with the disclosed embodiments, a user may perform gesture commands to control imaging device 110. For example, the captured images and videos may be analyzed to determine whether a user (hereinafter referred to as "first user") has performed certain predetermined gestures in front of imaging device 110. Depending on the gestures detected, imaging device 110 may perform various operations, such as generating a notification (or alert) and sending the notification to server 130, which may forward the notification to user device 150. In some embodiments, imaging device 110 may also send the notification to user device 150 directly, without involvement of server 130.

In response to a notification, the user (hereinafter referred to as "second user") of user device 150 may decide what action to take. The second user may ignore the notification, may forward the notification to another device or a third party, or may retrieve media information corresponding to the notification from imaging device 110, server 130, or any other devices that may store the relevant media information.

Consistent with the disclosed embodiments, the notification may be transmitted to user device 150 in real time or according to a predetermined schedule. For example, imaging device 110 and/or server 130 may transmit the notifications to user device 150 at a predetermined time interval. As another example, the second user may prefer not to receive any notification during certain time window (e.g., 10 pm - 6 am) of the day. Accordingly, server 130 may be set not to transmit notification to user device 150 during this time window.

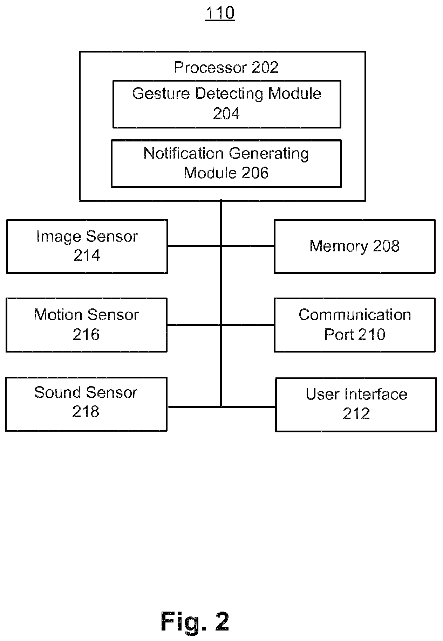

Next, the detailed structures and configurations of imaging device 110, server 130, and user device 150 will be described in connection with Figs. 2-4, respectively. Fig. 2 illustrates an exemplary configuration of imaging device 110. Imaging device 110 may include a processor 202, a memory 208, a communication port 210, a user interface 212, an image sensor 214, a motion sensor 216, and a sound sensor 218. In operation, processor 202 executes computer instructions (program code) and performs functions in accordance with techniques described herein. For example, processor 202 may instruct image sensor 214 to capture a video continuously. In other embodiments, processor 202 receives a signal from motion sensor 216 or sound sensor 218 indicating a potential (moving) object. Processor 202 then instructs image sensor 214 to capture one or more videos. Processor 202 includes or is part of one or more known processing devices such as, for example, a microprocessor. In some embodiments, processor 202 includes any type of single or multi-core processor, mobile device microcontroller, central processing unit, etc.

Memory 208 is configured to store one or more computer programs to be executed by processor 202 to perform exemplary functions disclosed herein. For example, memory 208 is configured to store program(s) executed by processor 202 to receive a signal from motion sensor 216 indicating a potential special event and instruct image sensor 214 to capture a video. Memory 208 is also configured to store data and/or parameters used by processor 202 in methods described in this disclosure. For example, memory 208 stores thresholds for detecting a potential special event based on a signal received from motion sensor 216 and/or sound sensor 218. Processor 202 can access the threshold(s) stored in memory 208 and detect one or more potential special events based on the received signal(s). Memory 208 may be a volatile or non-volatile, magnetic, semiconductor, tape, optical, removable, non-removable, or other type of storage device or tangible (i.e., non-transitory) computer-readable medium including, but not limited to, a read-only memory (ROM), a flash memory, a dynamic random access memory (RAM), and a static RAM.

Communication port 210 is configured to transmit to and receive data from, among other devices, server 130 and user device 150 over network 170. Network 170 may be any type of wired or wireless network that allows transmitting and receiving data. For example, network 170 may be a wired network, a local wireless network, (e.g., Bluetooth™, WiFi, near field communications (NFC), etc.), a cellular network, the Internet, or the like, or a combination thereof. Other known communication methods which provide a medium for transmitting data between separate devices are also contemplated.

In the disclosed embodiments, image sensor 214 is in communication with processor 202 and configured to capture videos. In some embodiments, image sensor 214 captures a video continuously. In other embodiments, image sensor 214 receives a control signal from processor 202 and captures a video in accordance with the received control signal. Image sensor 214 stores the captured videos in memory 208.

In some embodiments, imaging device 110 may include one or more motion sensors 216 and/or one or more sound sensors 218 for detecting a potential special event. For example, motion sensor 216 includes an ultrasonic sensor configured to emit ultrasonic signals and detect an object (still or moving) within a vicinity of imaging device 110 based on the reflected ultrasonic signals. Motion sensor 216 then generates a signal indicating that an object is present (i.e., a potential special event), which is transmitted to processor 202. After receiving the signal, processor 202 instructs image sensor 214 to start capturing an image or a video. In another example, sound sensor 218 includes a microphone configured to monitor ambient sound level and/or receive audio input from a user. If the ambient sound level exceeds a threshold, sound sensor 218 generates a signal indicating an abnormal sound (i.e., a potential special event), which is then transmitted to processor 202. After receiving the signal, processor 202 instructs image sensor 214 to start capturing a video. Other types of sensors for detecting an object, a moving object, and/or a sound are also contemplated.

Consistent with the disclosed embodiments, processor 202 may include a gesture detecting module 204 configured to detect a gesture performed by the first user. As described above, in one embodiment, imaging device 110 may be configured to continuously record a video of the surrounding scene via image sensor 214. As such, when the first user performs a gesture for controlling imaging device 110, gesture detecting module 204 may automatically detect and recognize the gesture based on the video recorded by image sensor 214. In another embodiment, image sensor 214 is configured to start recording a video upon receiving a control signal from processor 202. In this case, before performing a gesture for controlling imaging device 110, the first user may create a motion (e.g., by waving hands) or a sound (e.g., by clapping hands) in the vicinity of imaging device 110. The motion may be detected by motion sensor 216, which then sends a trigger signal to processor 202. Similarly, the sound may be detected by sound sensor 218, which then sends a trigger signal to processor 202. After receiving the trigger signal, processor 202 may activate image sensor 214 to record images/videos. Subsequently, the first user may perform the gesture, which is captured by image sensor 214 and detected by gesture detecting module 204.

Processor 202 may also include a notification generating module 206. When gesture detecting module 204 detects a gesture performed by the first user matches a predetermined gesture, notification generating module 206 may generate a notification and transmit the notification to user device 150 directly or via server 130. The notification may prompt the second user at the side of user device 150 to perform certain actions, such as replaying a video shot by imaging device 110, communicating with the first user, etc.

The above description presumes the first user can interact with and/or control imaging device 110 by gestures. Alternatively or additionally, the first user may also enter various commands and/or data into imaging device 110 via user interface 212. For example, user interface 212 may include a key board, a touch screen, etc.

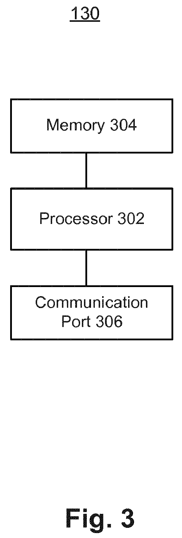

Fig. 3 illustrates an exemplary configuration of server 130. Referring to Fig. 3, server 130 may include, among other components, a processor 302, a memory 304, and a communication port 306. In operation, processor 302 executes computer instructions (program code) and performs functions in accordance with techniques described herein. For example, in some embodiments, processor 302 may be configured to execute the computer instructions to receive notifications from imaging device 110 and transmit the notifications to user device 150 in real time or at predetermined time intervals. Processor 302 may also receive a request for uploading one or more videos from imaging device 110 through communication port 306 over network 170. Processor 302 includes or is part of one or more known processing devices such as, for example, a microprocessor. In some embodiments, processor 302 includes any type of single or multi-core processor, mobile device microcontroller, central processing unit, etc.

Memory 304 is configured to store one or more computer programs to be executed by processor 302 to perform exemplary functions disclosed herein. Memory 304 may be volatile or non-volatile, magnetic, semiconductor, tape, optical, removable, non-removable, or other type of storage device or tangible (i.e., non-transitory) computer-readable medium including, but not limited to, a ROM, a flash memory, a dynamic RAM, and a static RAM.

Communication port 306 is configured to transmit to and receive data from, among other devices, imaging device 110 and/or user device 150 over network 170.

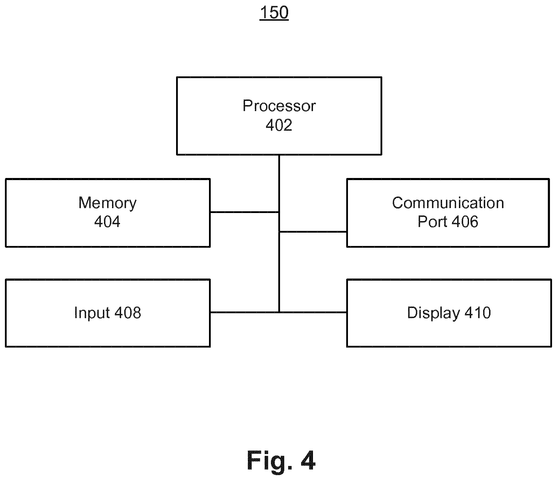

Fig. 4 illustrates an exemplary configuration of user device 150. Referring to Fig. 4, user device 150 may include, among other components, a processor 402, a memory 404, a communication port 406, an input 408, and a display 410. In operation, processor 402 executes computer instructions (program code) and performs functions in accordance with techniques described herein. For example, in some embodiments, processor 402 receives a preview video from imaging device 110. Processor 402 also receives an input from the user via input 408, and then presents the preview video to the user via display 410. Processor 402 further requests access to original videos captured by imaging device 110, which may be stored in imaging device 110 and/or server 130. Processor 402 includes or is part of one or more known processing devices such as, for example, a microprocessor. In some embodiments, processor 402 may include any type of single or multi-core processor, mobile device microcontroller, central processing unit, etc.

Memory 404 is configured to store one or more computer programs to be executed by processor 402 to perform exemplary functions disclosed herein. For example, memory 404 is configured to store program(s) that may be executed by processor 402 to present the received videos to the user. Memory 404 is also configured to store data and/or parameters used by processor 402 in methods described in this disclosure.

Communication port 406 is configured to transmit data to and receive data from, among other devices, imaging device 110 and/or server 130 over network 170.

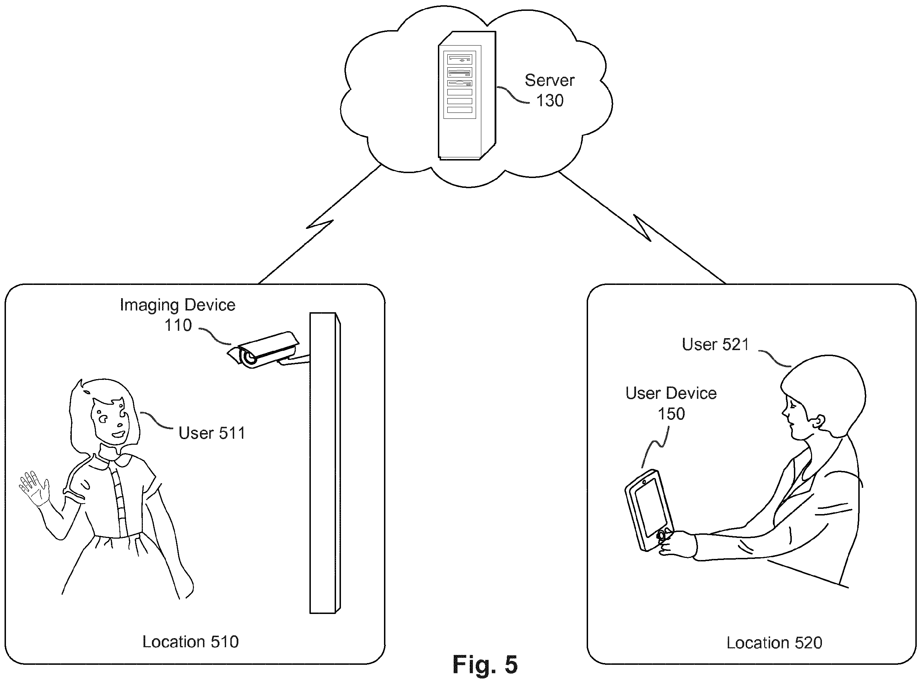

Fig. 5 is a schematic diagram illustrating an implementation of user-machine interaction system 100, according to an exemplary embodiment. Referring to Fig. 5, imaging device 110 may be installed at Location 510, e.g., in a house, a classroom, a hospital room, etc., and configured to record images or videos representing scenes at Location 510. User 511 is also at Location 510 and may interact with and/or control imaging device 110 by gestures. Moreover, user device 150 may be a mobile terminal (e.g., a smart phone) carried by user 521. Both user 521 and user device 150 are at Location 520, remote from Location 510. In one example, user 511 may control imaging device 110 to stream video signals to server 130 by performing certain predetermined gesture. Such gesture also causes imaging device 110 to generate a notification and transmit the notification to user device 150 directly or via server 130. The notification may prompt user 521 to play the streamed video. In another example, user 511 may initiate a video conference with user 521 by performing a predetermined gesture in front of imaging device 110. Upon detecting and recognizing the gesture, imaging device 110 may generate a notification inviting user 521 to have a video conference with user 511. User device 150 may receive and play the notification, such that user 521 may respond to the notification by operating user device 150 to establish a connection with imaging device 110. This way, imaging device 110 may stream videos representative of the scene at Location 510 to user device 150 directly or via server 130.

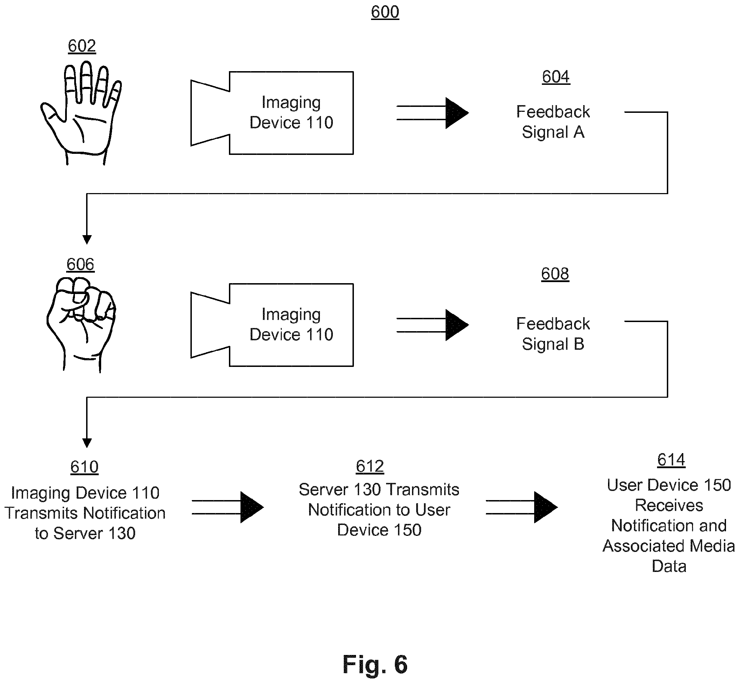

Next, the disclosed user-machine interaction methods will be described in detail in connection with Figs. 6-8. Fig. 6 is a schematic diagram illustrating a user-machine interaction method 600 based on multiple feedback signals, according to an exemplary embodiment. For example, method 600 may be performed by imaging device 110. Referring to Fig. 6, to initiate method 600, a user of imaging device 110 may perform a first gesture, e.g., opening a palm, in front of imaging device 110 (step 602). When imaging device 110 recognizes the first gesture, imaging device 110 may generate a first feedback signal, i.e., feedback signal A, to indicate the first gesture is recognized and prompt the user to perform a second gesture (step 604). Upon receiving feedback signal A, the user may perform the second gesture, e.g., forming a fist (step 606). When imaging device 110 recognizes the second gesture, imaging device 110 may generate a second feedback signal, i.e., feedback signal B, to indicate the second gesture is also recognized and a notification corresponding to the sequence of first and second gestures will be generated (step 608). Imaging device 110 then generates the corresponding notification and transmits it to server 130 (step 610), which subsequently relays the notification to user device 150 (step 612). Upon receiving the notification, user device 150 may receive and replay the media information (e.g., images, videos, sound, etc.) recorded by imaging device 110.

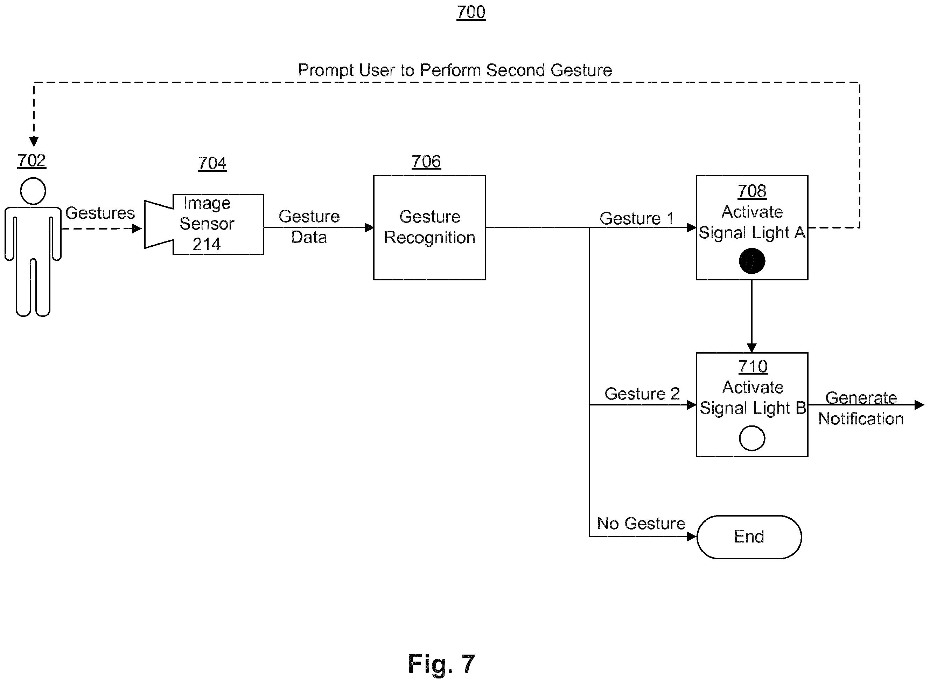

Fig. 7 is a schematic diagram illustrating a user-machine interaction method 700 based on multiple feedback signals, according to another exemplary embodiment. For example, method 700 may be performed by imaging device 110. Referring to Fig. 7, imaging device 110 includes at least two signal lights A and B for providing feedback signals to a user (e.g., user 511) of imaging device 110. In step 702, the user of imaging device 110 performs a gesture, e.g., opening a palm. In step 704, image sensor 214 records image data representing the gesture and transmits the image data to processor 202 for further processing. In step 706, processor 202 implements a gesture-recognition algorithm to analyze the received image data. When processor 202 recognizes the gesture represented by the image data, processor 202 further compares the recognized gesture to one or more preset gestures. In step 708, when the recognized gesture matches a predetermined Gesture 1, processor 202 activates signal light A, which prompts the user to perform a second gesture. Subsequently, steps 702-706 are performed again to capture and recognize a second gesture performed by the user. In step 710, when imaging device 110 determines the second gesture matches a predetermined Gesture 2, processor 202 activates signal light B, indicating the notification corresponding to the sequence of Gesture 1 and Gesture 2 will be generated.

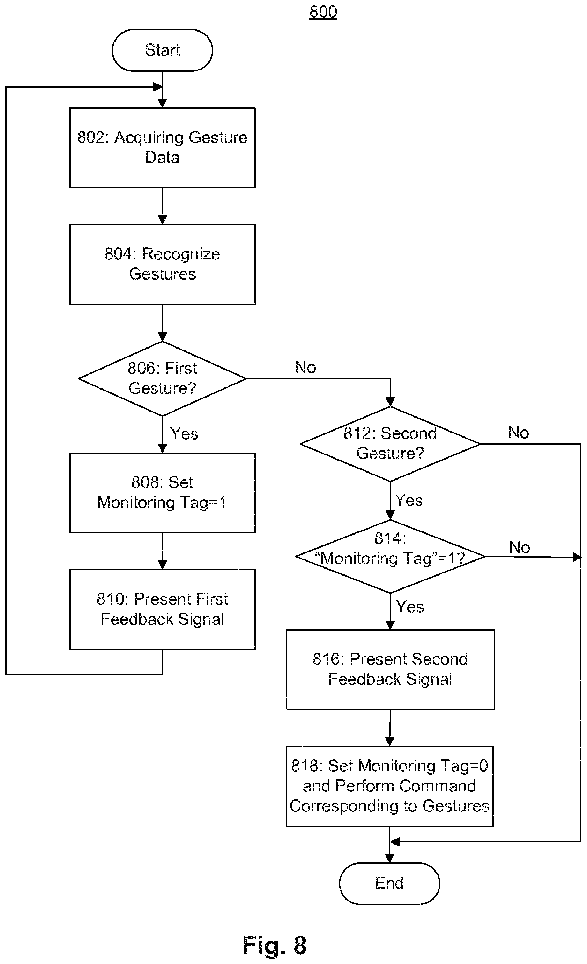

Fig. 8 is a flowchart of a user-machine interaction method 800, according to an exemplary embodiment. For example, method 800 may be performed by imaging device 110. Referring to Fig. 8, method 800 may include the following steps 802-818.

In step 802, imaging device 110 may obtain gesture data representing a gesture performed by a user. For example, the gesture data may include one or more image frames. In some embodiments, the image frames are captured successively in time by image sensor 214 and form a video clip. The image frames may show a static hand or finger gesture, and/or a dynamic gesture (i.e., a motion) of the hand or finger.

In step 804, imaging device 110 may recognize the gesture based on the gesture data. For example, imaging device 110 may use any suitable computer-vision or gesture-recognition algorithm to extract features from the gesture data and decipher the gesture represented by the gesture data.

In step 806, imaging device 110 may determine whether the recognized gesture matches a preset gesture. For example, imaging device 110 may query a database storing features of a plurality of preset gestures. When the extracted features of the recognized gesture match those of a first preset gesture, imaging device 110 concludes the recognized gesture matches the first preset gesture.

In step 808, when the recognized gesture matches the first preset gesture, imaging device 110 sets a monitoring tag to be "1," indicating the first preset gesture has been recognized. The monitoring tag may be stored in a cache of processor 202.

In step 810, imaging device 110 presents a first feedback signal to the user, prompting the user to perform a second preset gesture. The first feedback signal may be in the form of a light signal, a sound signal, a vibration, etc. Subsequently, steps 802-806 are performed again. When imaging device 110 determines the user's subsequently performed gesture is not the first preset gesture, imaging device 110 proceeds to step 812 and determines whether the subsequent gesture matches a second preset gesture (step 812). When the subsequent gesture matches the second preset gesture, imaging device 110 proceeds to step 814. Otherwise, method 800 ends and imaging device 110 may set the monitoring tag to be "0".

In some embodiments, imaging device 110 proceeds to step 814 only if the second preset gesture is detected within a predetermined time window after the first preset gesture is detected. Otherwise, method 800 ends and imaging device 110 may set the monitoring tag to be "0".

In step 814, imaging device 110 checks whether the monitoring tag is currently set as "1." When the monitoring tag is currently set as "1," indicating the last recognized gesture is the first preset gesture, imaging device 110 proceeds to step 816. Otherwise, method 800 ends and imaging device 110 may set the monitoring tag to be "0".

In step 816, imaging device 110 presents a second feedback signal to the user, indicating a command corresponding to the sequence of the first and second preset gestures will be generated, and then proceeds to step 818. The second feedback signal is different from the first feedback signal and may be in the form of a light signal, a sound signal, a vibration, etc.

In step 818, imaging device 110 sets the monitoring tag to be "0" and performs the command corresponding to the sequence of the first and second preset gestures. For example, based on the command, imaging device 110 may generate a notification, and transmit the notification and media data associated with the notification to server 130. Server 130 may then send the notification to user device 150, prompting the user of user device 150 to play the media information. If the user of user device 150 chooses to playback the media information, user device 150 may receive streaming of the media data from server 130 and play the media information.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact constructions that are described above and illustrated in the accompanying drawings, and that various modifications and changes can be made without departing from the scope thereof. It is intended that the scope of the invention should only be limited by the appended claims.

## Claims

1. A method for machine processing user commands, the method comprising:
obtaining image data;
analyzing the image data by a machine to detect occurrence of events;
generating a first signal indicating detection of a first event; and
performing an operation upon detection of a first occurrence of a second event after generation of the first signal.

2. The method of claim 1, wherein analyzing the image data comprises:
performing a comparison of the image data to reference data representing the first and second events; and
detecting the first and second events based on the comparison.

3. The method of claim 1 or claim 2, further comprising:
upon detection of the first occurrence of the second event after the first signal is generated, generating a second signal indicating detection of the second event.

4. The method of any of claims 1 to 3, further comprising:
performing the operation only upon detection of the second event within a predetermined amount of time after generation of the first signal.

5. The method of any of claims 1 to 4, wherein detection of a first occurrence of a second event after generation of the first signal comprises:
detecting the first occurrence of the second event after generation of the first signal, based on a value of a monitoring tag.

6. The method of claim 5, further comprising:
upon detection of the first event, setting the monitoring tag to a first value.

7. The method of claim 6, further comprising:
when neither the first event nor the second event is detected within a predetermined amount of time after the first signal is generated, setting the monitoring tag to a second value.

8. The method of claim 6, further comprising:
upon detection of the second event, determining whether the monitoring tag is set at the first value; and
upon detecting that the monitoring is set at the first value, performing the operation.

9. The method of claim 6 or claim 8, further comprising:
after performing the operation, setting the monitoring tag to a second value.

10. The method of any of claims 1 to 9, wherein the first and second events correspond respectively to a first gesture and a second gesture.

11. The method of any of claims 1 to 10, wherein the first signal comprises at least one of a visual signal or an audio signal.

12. A device, comprising:
a memory storing instructions; and
a processor configured to execute the instructions to cause the device to perform the method of any of claims 1 to 11.

13. A computer-readable storage medium storing instructions that, when executed by a processor of a machine, cause the machine to perform the method of any of claims 1 to 11.
